# EUROPEAN PATENT SPECIFICATION

(11) **EP 4 043 322 B1**
(45) Date of publication and mention of the grant of the patent: **26.02.2025**
(21) Application number: 21855100.0
(22) Date of filing: 31.03.2021
(51) Int. Cl.: B62D 57/032, B25J 13/08

(54) **LEG ASSEMBLY AND DEVICE FOR ROBOT**
BEINANORDNUNG UND VORRICHTUNG FÜR ROBOTER
ENSEMBLE JAMBE ET DISPOSITIF POUR ROBOT

(30) Priority: 11.08.2020 CN 202010802986
(43) Date of publication of application: 17.08.2022
(73) Proprietor: Tencent Technology (Shenzhen) Company Limited, Shenzhen, Guangdong, 518057 (CN)
(72) Inventor: CHI, Wanchao, Shenzhen, Guangdong 518057, (CN); ZHENG, Yu, Shenzhen, Guangdong 518057, (CN); DAI, Yuan, Shenzhen, Guangdong 518057, (CN); XIONG, Kun, Shenzhen, Guangdong 518057, (CN); CHEN, Xiangyu, Shenzhen, Guangdong 518057, (CN); ZHOU, Qinqin, Shenzhen, Guangdong 518057, (CN); ZHANG, Zhengyou, Shenzhen, Guangdong 518057, (CN)
(74) Representative: Eisenführ Speiser
(86) International application number: PCT/CN2021/084746
(87) International publication number: WO 2022/033044

(56) References cited:
- WO-A1-2020/113262
- CN-A- 105 015 641
- CN-A- 108 216 420
- CN-A- 108 706 060
- CN-A- 108 974 172
- CN-A- 111 924 020
- CN-U- 202 413 981
- JP-A- 2013 208 294
- US-A1- 2005 107 916
- US-B2- 7 664 572
- VALSECCHI GIORGIO ET AL: "Quadrupedal Locomotion on Uneven Terrain With Sensorized Feet", IEEE ROBOTICS AND AUTOMATION LETTERS, IEEE, vol. 5, no. 2, 23 January 2020 (2020-01-23), pages 1548 - 1555, XP011770716, DOI: 10.1109/LRA.2020.2969160

## Description

This application claims priority to Chinese Patent Application No. 202010802986.X, entitled "LEG ASSEMBLY AND DEVICE FOR ROBOT" and filed on August 11, 2020.

### BACKGROUND

At present, increasingly more legged robots are designed and applied in daily life. In a process of designing a legged robot, it is required to consider how to control the legged robot to walk and move normally in different environments, to solve the problem of unstable walking and moving of the legged robots that is caused by an unknown environment.

In the conventional art, a pressure sensor is installed on a foot of a legged robot, to sense the magnitude and direction of a pressure contacted by the foot of the legged robot, and a walking mode of the legged robot is adjusted according to the detected information of the pressure, for example, a stride or a walking direction is adjusted, to realize normal walking of the legged robot in some unknown environments.

However, in a process of practically applying the solutions in the conventional art, there is a problem that the legged robot cannot be controlled to move normally in some unknown environments by adjusting foot postures because the legged robot has a little perception information about the environment, resulting in limited application scenarios of the legged robot.

The prior art document No. US2005107916A1 provides a locomotion control system to input the quantity of materials in the real world, such as the quantity of motion state of a robot, external force and external moment, and environmental shapes, measured with sensors or the like. By integrating all calculations for maintaining a balance of the body into a single walking-pattern calculating operation, both a locomotion generating function and an adaptive control function are effectively served, the consistency of dynamic models is ensured, and interference between the dynamic models is eliminated. Calculations for generating a walking pattern of the robot can be performed in an actual apparatus and in real time in a manner in which parameters, such as a boundary condition concerning the quantity of motion state, external force and external moment, and the trajectory of the sole, are settable.

The prior art document No. XP11770716A provides a reactive locomotion strategy for torque controllable quadruped robots based on sensitized feet. Since the present approach works without exteroceptive sensing, it is robust against degraded vision. Inertial and force/torque sensors implemented in specially designed feet with articulated passive ankle joints measure the local terrain inclination and interaction forces. The proposed controller exploits the contact null-space in order to minimize the tangential forces to prevent slippage even in case of extreme contact conditions.

The prior art document No. CN105015641A1 provides a foot mechanism with high load bearing of a foot type robot, belongs to the technical field of robots, and relates to a foot mechanism with high load bearing of the foot type robot, which has a favorable shock absorption property and a favorable self-resetting property. The foot mechanism of the foot type robot adopts conical springs to realize the shock absorption property and the self-resetting property of the foot mechanism and adopts a piston sliding structure to realize a shock absorption displacement stroke, and the requirements for the high load bearing, the good shock absorption property and the good self-resetting property of the foot mechanism are met. In the foot mechanism, a slip-proof rubber foot bottom pad is bonded on a foot bottom plate, so that a slip phenomenon in an advance process is avoided; spring seats are mounted in grooves of the foot bottom plate, and the conical springs are mounted between the spring seats and lower bearing pad rings; a ball head rod is mounted in an arc-shaped groove of the foot bottom plate, a ball pair structure is constituted by the ball head rod and the arc-shaped groove, and the ball pair is in clearance fit. According to the foot mechanism disclosed by the invention, the requirements for the high load bearing, the good shock absorption property and the good self-resetting property of the foot mechanism are met, and the foot mechanism is simple in integral structure, low in gravity center design, and safe and reliable.

The prior art document No. US7664572B2 provides a control device of a legged mobile robot, wherein a state amount error (for example, an error of a vertical position of a body 3), which is a difference between an actual state amount and a state amount of a desired gait related to a translational motion in a predetermined direction (for example, a translational motion in a vertical direction) of a legged mobile robot 1, is determined, and then a desired motion of the desired gait is determined such that the state amount error approaches zero. The desired motion is determined using a dynamic model by additionally inputting a virtual external force determined on the basis of the state amount error to the dynamic model for generating desired gaits. At the same time, a desired floor reaction force of the robot 1 is corrected on the basis of a state amount error of zero, and compliance control is carried out to make the motion and the floor reaction force of the robot 1 follow the desired motion and the desired floor reaction force of the desired gait.

### SUMMARY

A leg assembly and device for a robot are provided according to this application. The technical solutions are described as follows.

In an aspect, a leg assembly for a robot is provided, the leg assembly 100 includes: a connection assembly 110 and a plantar assembly 120. The connection assembly 110 is configured to connect the leg assembly 100 with an upper body 140 of the robot. The plantar assembly 120 includes a plantar plate 1201, a first force sensor 1202, a distance sensor 1203, and a posture sensor 1204. The connection assembly 110 includes a second force sensor 1101 and a shank connector 1102. The first force sensor 1202, the distance sensor 1203, the posture sensor 1204, and the second force sensor 1101 are electrically connected to a control unit 130. The first force sensor 1202 is configured to detect a normal reaction force applied to the plantar plate 1201 when the plantar plate (1201) is in contact with an obstacle. The distance sensor 1203 is configured to detect a distance between the plantar plate 1201 and the obstacle in real time. The posture sensor 1204 is configured to detect a spatial orientation of the plantar plate 1201. The second force sensor 1101 is configured to detect a resultant force of reaction forces applied to the plantar plate 1201 when the plantar plate (1201) is in contact with the obstacle. The plantar plate 1201 is a metal structure part with a void or a groove. The first force sensor 1202, the distance sensor 1203, and the posture sensor 1204 are connected to the control unit 130 via connection wires passing through the void or the groove of the metal structure part. A bottom and an outer side of the metal structure part are cladded with plantar rubber 1206. The first force sensor 1202 is an ionic thin-film force sensor. The ionic thin-film force sensor is arranged between the plantar rubber 1206 and the bottom of the metal structure part, and the ionic thin-film force sensor is of a ring shape. The distance sensor 1203 is a thin-film distance sensor. The thin-film distance sensor is centrally arranged between the plantar rubber 1206 and the bottom of the metal structure part. A thickness of the plantar rubber 1206 at a portion under the thin-film distance sensor is smaller than a thickness of the plantar rubber 1206 at another portion.

In an embodiment, the plantar assembly 120 is connected with the connection assembly 110 through a joint assembly 150. The joint assembly 150 includes a joint ball socket 1501, a ball joint 1502, and an elastic assembly 1503. The plantar plate 1201 is configured to drive, in response to a reaction force from a contact surface, the joint ball socket 1501 to rotate relative to the ball joint 1502 with three degrees of freedom, to adapt the plantar plate to fit the contact surface.

In an embodiment, the elastic assembly 1503 includes a conical return spring. The conical return spring is configured to be in a passively compressed state in a case that the plantar plate 1201 is in contact with the obstacle. The conical return spring is further configured to release stored energy in a case that the plantar plate 1201 is separated from the obstacle, to drive the plantar plate 1201 to restore to an initial state.

In an embodiment, the joint ball socket 1501 includes a limiting structure. The joint ball socket with the limiting structure are provided with low front and rear edges and high left and right edges.

In an embodiment, the posture sensor 1204 is arranged in the groove of the metal structure part.

In an embodiment, the elastic assembly 1503 includes a conical return spring. The conical return spring is sleeved on a periphery of the ball joint 1502, and a lower end of the conical return spring is connected to the plantar plate 1201, and an upper end of the conical return spring is connected to the shank connector 1102.

In an embodiment, the shank connector 1102 is a hollow triangular prism connector. A lower end of the shank connector 1102 is connected to the second force sensor 1101 by using a flange.

In an embodiment, the posture sensor 1204 is an inertial measurement unit (IMU).

In an embodiment, the second force sensor 1101 is a six-axis force sensor.

In an embodiment, the control unit 130 is arranged in the upper body 140 of the robot.

In an embodiment, a contact surface of the plantar plate 1201 with the environment is a circular plane.

In an embodiment, an encoder is arranged on the ball joint 1502.

In an aspect, a leg device for a robot is provided, the device includes an upper body 140 of the robot and the leg assembly 100.

The technical solutions according to this application may realize the following beneficial effects. In the solutions in the embodiments of this application, by installing a first force sensor, a distance sensor, a posture sensor, and a second force sensor in a leg assembly for a robot, the leg assembly can perform comprehensive detection of a contact environment, and upload detection results of the sensors to a control unit, so that the control unit comprehensively controls the robot based on the detection results of the sensors. With the solutions in this application, rather than obtaining a measurement result in a single aspect through detection of a single pressure sensor, more types and quality of perception information about the environment are obtained by the robot, so that the control unit can obtain a more comprehensive detection result, and control the robot to move through the leg assembly according to the detection result, thereby greatly improving a control effect on the leg assembly of the robot, thus extending application scenarios of a legged robot.

### BRIEF DESCRIPTION OF THE DRAWINGS

The drawings herein are included in this specification and form a part of this specification, illustrate embodiments consistent with the present disclosure, and are used to explain the principles of the present disclosure together with this specification.
FIG. 1 is a constructional diagram of a leg assembly for a robot according to an exemplary embodiment.
FIG. 2 is a schematic structural diagram of a leg assembly according to an exemplary embodiment.
FIG. 3 is a schematic cross-sectional structural diagram of the plantar assembly 120 in the embodiment shown in FIG. 2.
FIG. 4 is a schematic cross-sectional structural diagram of the joint assembly 150 in the embodiment shown in FIG. 2.
FIG. 5 is a schematic cross-sectional structural diagram of the connection assembly 110 in the embodiment shown in FIG. 2.
FIG. 6 is a schematic diagram of a robot device to which a leg assembly is applied according to an exemplary embodiment.
FIG. 7 is a flowchart of a method for applying a leg assembly for a robot to perform sensor detection according to an exemplary embodiment.

### DESCRIPTION OF EMBODIMENTS

Exemplary embodiments are described in detail herein, and examples of the exemplary embodiments are shown in the drawings. When the following description involves the drawings, unless otherwise indicated, the same numerals in different drawings represent the same or similar elements. The following exemplary embodiments do not represent all embodiments that are consistent with this application. On the contrary, the exemplary embodiments are merely examples of devices and methods that are described in detail and that are consistent with the claims and some aspects of this application.

It is to be understood that, "several" mentioned in this specification means one or more, and "plurality of" means two or more. And/or describes an association relationship for describing associated objects and represents that three relationships may exist. For example, A and/or B may represent the following three cases: only A exists, both A and B exist, and only B exists. The character "/" in this specification generally indicates an "or" relationship between the associated objects.

For ease of understanding, several terms involved in this application are explained below.

### (1) Artificial intelligence

Artificial intelligence (AI) indicates a theory, method, technology, and application system that uses a digital computer or a machine controlled by the digital computer to simulate, extend, and expand human intelligence, perceive an environment, obtain knowledge, and use knowledge to obtain an optimal result. In other words, the Al indicates a comprehensive technology of computer science, which attempts to understand essence of intelligence and produces a new intelligent machine that can respond in a manner similar to human intelligence. The Al is used to study the design principles and implementation methods of various intelligent machines, to enable the machines to have the functions of perception, reasoning, and decision-making.

The Al technology involves a comprehensive discipline, and relates to a wide range of fields including both hardware-level technologies and software-level technologies. The basic Al technologies generally include technologies such as a sensor, a dedicated Al chip, cloud computing, distributed storage, a big data processing technology, an operating/interaction system, and electromechanical integration. The Al software technologies mainly include several major directions such as a computer vision technology, a speech processing technology, a natural language processing technology, and machine learning/deep learning.

With the research and progress of the Al technology, the Al technology is studied and applied in many fields such as a common smart home, a smart wearable device, a virtual assistant, a smart speaker, smart marketing, unmanned driving, automatic driving, an unmanned aerial vehicle, a robot, smart medical care, and smart customer service. It is believed that with the development of technologies, the Al technology will be applied to more fields, and play an increasingly important role.

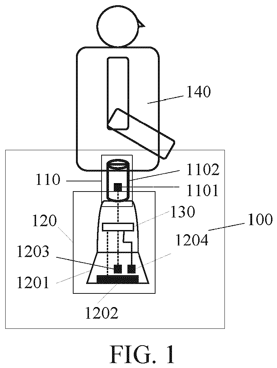

FIG. 1 is a constructional diagram of a leg assembly for a robot according to an exemplary embodiment of this application. As shown in FIG. 1, the leg assembly 100 includes: a connection assembly 110 and a plantar assembly 120. The connection assembly 110 is configured to connect the leg assembly 100 with an upper body 140 of the robot. The plantar assembly 120 includes a plantar plate 1201, a first force sensor 1202, a distance sensor 1203, and a posture sensor 1204. The connection assembly 110 includes a second force sensor 1101 and a shank connector 1102. The first force sensor 1202, the distance sensor 1203, the posture sensor 1204, and the second force sensor 1101 are electrically connected to a control unit 130. The first force sensor 1202 is configured to detect a normal reaction force applied to the plantar plate 1201 when the plantar plate 1201 is in contact with an obstacle. The distance sensor 1203 is configured to detect a distance between the plantar plate 1201 and the obstacle in real time. The posture sensor 1204 is configured to detect a spatial orientation of the plantar plate 1201. The second force sensor 1101 is configured to detect a resultant force of reaction forces applied to the plantar plate 1201 when the plantar plate 1201 is in contact with the obstacle.

Therefore, by installing a first force sensor, a distance sensor, a posture sensor, and a second force sensor in a leg assembly for a robot, the leg assembly can perform comprehensive detection of a contact environment, and upload detection results of the sensors to a control unit, so that the control unit comprehensively controls the robot based on the detection results of the sensors. With the solutions in this application, rather than obtaining a measurement result in a single aspect through detection of a single pressure sensor, more types and quality of perception information about the environment are obtained by the robot, so that the control unit can obtain a more comprehensive detection result, and control the robot to move through the leg assembly according to the detection result, thereby greatly improving a control effect on the leg assembly of the robot, thus extending application scenarios of a legged robot.

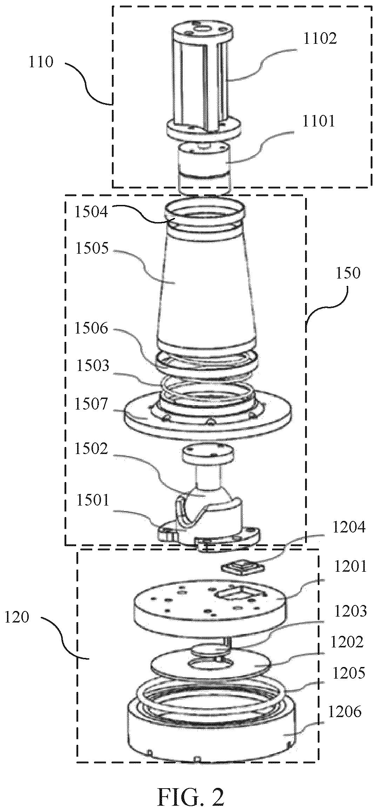

FIG. 2 is a schematic structural diagram of a leg assembly according to an exemplary embodiment of this application. As shown in FIG. 2, the leg assembly 100 includes: a connection assembly 110 and a plantar assembly 120. The connection assembly 110 is configured to connect the leg assembly 100 with an upper body 140 of the robot. The plantar assembly 120 includes a plantar plate 1201, a first force sensor 1202, a distance sensor 1203, and a posture sensor 1204. The connection assembly 110 includes a second force sensor 1101 and a shank connector 1102. The first force sensor 1202, the distance sensor 1203, the posture sensor 1204, and the second force sensor 1101 are electrically connected to a control unit 130. The first force sensor 1202 is configured to detect a normal reaction force applied to the plantar plate 1201 when the plantar plate 1201 is in contact with an obstacle. The distance sensor 1203 is configured to detect a distance between the plantar plate 1201 and the obstacle in real time. The posture sensor 1204 is configured to detect a spatial orientation of the plantar plate 1201. The second force sensor 1101 is configured to detect a resultant force of reaction forces applied to the plantar plate 1201 when the plantar plate 1201 is in contact with the obstacle.

In an embodiment, the plantar assembly 120 is connected with the connection assembly 110 through a joint assembly 150. The control unit 130 may be arranged in the leg assembly 100. Alternatively, the control unit 130 may be arranged in the upper body 140 of the robot.

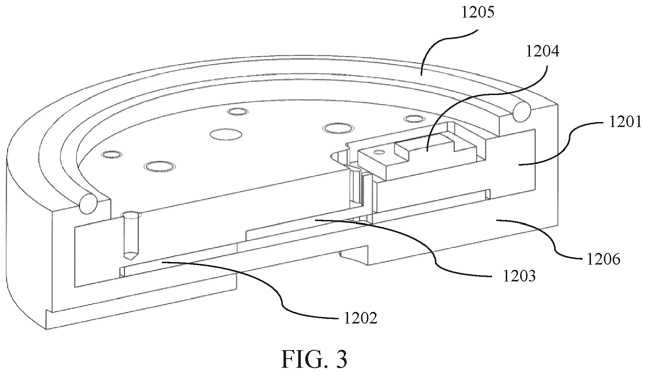

For example, FIG. 3 is a schematic cross-sectional structural diagram of the plantar assembly 120 in the embodiment of this application. As shown in FIG. 3, the plantar assembly 120 is an assembly of the robot that directly contacts the environment. Different degrees of contact between the environment and the plantar assembly 120 may be reflected by reaction forces of different magnitudes and different directions applied by the environment to the plantar assembly 120. In order to accurately measure an influence generated by the environment on the plantar assembly 120, the plantar assembly 120 needs to install a sensor configured to measure information generated by the robot on the contact with the environment. The plantar assembly 120 may include: a plantar plate 1201, a first force sensor 1202, a distance sensor 1203, a posture sensor 1204, a seal ring 1205, and plantar rubber 1206.

In an embodiment, a contact surface of the plantar plate 1201 with the environment is a circular plane. The circular plane may provide an isotropic contact condition, and facilitates mechanical modeling of a plantar contact force by using a classical Coulomb friction cone model.
is a static friction force, is a coefficient of static friction, and is a normal contact force.

In an embodiment, to increase a friction coefficient of the plantar plate, provide a certain degree of buffering to an impact to the robot when the robot sets foot on the ground, and protect the plantar plate 1201. In addition, a bottom and an outer side of the plantar plate 1201 are cladded with a rubber pad as the plantar rubber 1206.

In an embodiment, the first force sensor 1202 is arranged between the bottom of the plantar plate 1201 and the plantar rubber 1206. The first force sensor 1202 may be an ionic thin-film force sensor, and is arranged between the bottom of the plantar plate 1201 and the plantar rubber 1206 and is of a ring shape. The ionic thin-film force sensor may be configured to measure a normal contact force between the obstacle in contact with the plantar plate 1201 and the plantar plate 1201. By using the ionic thin-film force sensor, the accuracy of measuring the normal contact force can be improved, a space occupied by the force sensor of the plantar assembly 120 is reduced, and a weight of the plantar assembly 120 is also reduced.

In an embodiment, the distance sensor 1203 is arranged between the lower part of the plantar plate 1201 and the plantar rubber 1206 at the bottom. The distance sensor 1203 is arranged in a central area of the first force sensor 1202 that is of a ring shape, and the distance sensor 1203 may be a thin-film distance sensor. The thin-film distance sensor may be configured to measure a distance between the plantar rubber 1206 and the obstacle when the plantar plate 1201 is being close to or away from the obstacle in the environment.

In an embodiment, a thickness of the plantar rubber 1206 at a portion under the thin-film distance sensor is smaller than a thickness of the plantar rubber 1206 at another portion of the plantar assembly 120. By reducing the thickness of the portion of the plantar rubber 1206 under the thin-film distance sensor, the thin-film distance sensor may obtain a better measurement effect and have a large measurement distance. Measured values of a distance between the plantar rubber 1206 and the external environment and the normal contact force that are detected by the thin-film distance sensor and the ionic thin-film force sensor are all uploaded to a control unit 130, so that a control effect of the control unit 130 on the leg assembly 100 can be improved.

In an embodiment, the posture sensor 1204 is an inertial measurement unit (IMU). The IMU is a device configured to measure a three-axis posture angle and an acceleration of an object.

In an embodiment, postures of a coordinate system of the IMU relative to a coordinate system of the plantar plate 1201 may be arbitrarily arranged, and after the arranged IMU and plantar plate are calibrated, a three-axis posture angle of the plantar plate 1201 may be measured as a posture measurement value. A spatial orientation of the plantar plate 1201 is determined based on the posture measurement value.

In an embodiment, the coordinate system of the IMU and the coordinate system of the plantar plate 1201 are aligned. When the coordinate system of the IMU and the coordinate system of the plantar plate 1201 are aligned, the arranged IMU and plantar plate may not be calibrated, and the posture measurement value is directly measured through the IMU. The IMU measures Euler angles of the plantar plate 1201 in a geographic absolute coordinate system. The Euler angles represent a series of three-dimensional basic rotation angles, that is, a series of rotation angles around coordinate axes of a coordinate system. For example, an angle is first formed by rotating around a z-axis, an angle is formed by rotating around an x-axis, and an angle is formed by rotating around a z-axis. According to the obtained Euler angles, the spatial orientation of the plantar plate 1201 is obtained.

In an embodiment, a shock absorbing gasket is arranged between the posture sensor 1204 and a metal structure part (the plantar plate 1201), to reduce interference on measurement of the posture sensor 1204 or physical damage to the posture sensor 1204 caused by a landing impact of the plantar plate 1201.

In an embodiment, a seal ring 1205 is configured to improve a connection effect with an upper cover of the plantar plate.

In an embodiment, the plantar plate 1201 is a metal structure part with a void or a groove. The first force sensor 1202, the distance sensor 1203, and the posture sensor 1204 are connected to the shank connector 1102 via connection wires passing through the void or the groove of the metal structure part. A contact surface of the plantar plate 1201 with the ground may be a circular plane. When the control unit 130 is arranged in the upper body 140 of the robot, the connection wires may be connected to the control unit 130 in the upper body 140 of the robot through the shank connector 1102.

In an embodiment, a bottom and an outer side of the metal structure part are cladded with plantar rubber 1206. That is, when the plantar plate 1201 is implemented as the metal structure part, the bottom and the outer side of the plantar plate 1201 are cladded with the plantar rubber 1206.

In an embodiment, the first force sensor 1202 is an ionic thin-film force sensor. The ionic thin-film force sensor is arranged between the plantar rubber 1206 and the bottom of the metal structure part. The ionic thin-film force sensor is of a ring shape.

In an embodiment, the distance sensor 1203 is a thin-film distance sensor. The thin-film distance sensor is centrally arranged between the plantar rubber 1206 and the bottom of the metal structure part. A thickness of a portion of the plantar rubber 1206 under the thin-film distance sensor is smaller than a thickness of the plantar rubber 1206 at another portion.

In an embodiment, the posture sensor 1204 is arranged in the groove of the metal structure part.

In an embodiment, a shock absorbing gasket is installed between the posture sensor 1204 and the metal structure part (the plantar plate 1201). The joint assembly 150 includes a joint ball socket 1501, a ball joint 1502, an elastic assembly 1503, a lower snap ring 1506, a flexible cover 1505, and an upper snap ring 1504. In response to a reaction force applied to the plantar plate 1201, the plantar plate 1201 drives the joint ball socket 1501 to rotate relative to the ball joint 1502 with three degrees of freedom, so that the plantar plate 1201 adapts to fit the contact surface.

In an embodiment, the elastic assembly 1503 includes a conical return spring. The conical return spring is configured to be in a passively compressed state in a case that the plantar plate 1201 is in contact with an obstacle, and release stored energy (elastic potential energy) in a case that the plantar plate is separated from the obstacle, so as to drive the plantar plate 1201 to restore to an initial state.

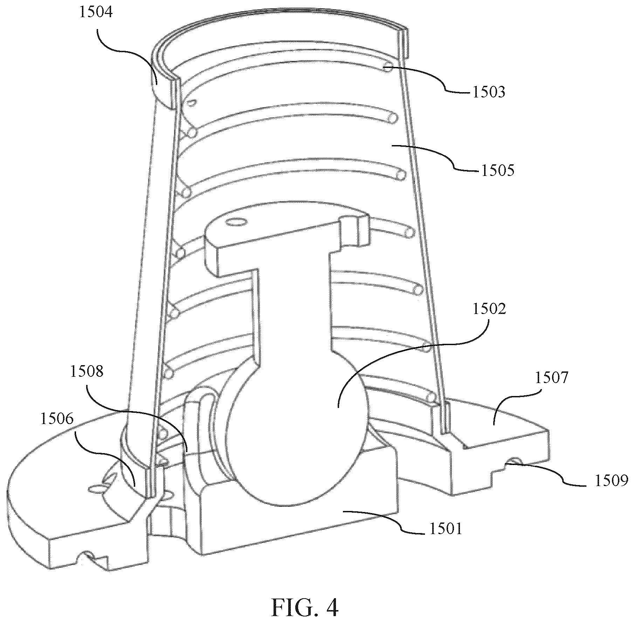

In an embodiment, the joint ball socket 1501 includes a limiting structure. The joint ball socket with the limiting structure are provided with low front and rear edges and high left and right edges. The joint assembly 150 may enable the plantar assembly 120 to have a certain degree of freedom, so that the plantar assembly 120 may rotate by a certain degree. For example, FIG. 4 is a schematic cross-sectional structural diagram of the joint assembly 150 in an embodiment of this application. As shown in FIG. **4****,** the joint assembly 150 may include: a joint ball socket 1501, a ball joint 1502, an elastic assembly 1503, an upper snap ring 1504, a flexible cover 1505, a lower snap ring 1506, an upper cover 1507 of a plantar plate, a ball socket involute groove 1508, and a seal ring groove 1509.

In an embodiment, the plantar assembly 120 and the joint assembly 150 are connected with each other by tightly fitting the seal ring groove 1509 on the upper cover 1507 of the plantar plate and the seal ring 1205 in the plantar assembly 120 shown in FIG. 3.

In an embodiment, the joint ball socket 1501 may rotate relative to the ball joint 1502 with three degrees of freedom.

In an embodiment, the joint ball socket 1501 includes a limiting structure. The joint ball socket with the limiting structure are provided with low front and rear edges and high left and right edges. For a degree of freedom in pitch, the joint assembly 150 expands a motion range through the low front and rear edges of the joint ball socket, and for a degree of freedom in roll, the joint assembly 150 maintains a small motion range through the high left and right edges of the joint ball socket. The low edges of the joint ball socket 1501 may form the ball socket involute groove 1508. When the ball socket involute groove 1508 is enlarged, the degree of freedom in pitch of the ball joint 1502 may be improved. A ball head of the ball joint 1502 is adapted to a size of the joint ball socket 1501, to ensure connection strength between the joint ball socket 1501 and the ball head of the ball joint 1502, thereby preventing disconnection.

In an embodiment, the plantar plate 1201 is configured to drive, in response to a reaction force from a contact surface, the joint ball socket 1501 to rotate relative to the ball joint 1502 with three degrees of freedom, so that the plantar plate 1201 is adapted to fit the contact surface. When the plantar plate 1201 is in contact with an obstacle, the reaction force applied to the plantar plate 1201 by the obstacle drives the joint ball socket 1501 to adaptively adjust angles of directions of the three degrees of freedom, so as to adjust posture angles of the connected plantar plate 1201 in the directions of the three degrees of freedom, thereby adaptively adjusting a spatial orientation of the plantar plate 1201. When the plantar plate 1201 is in contact with the obstacle, in order to adaptively adapt the plantar plate 1201 to fit the obstacle under different contact angles, the angles in the directions of the three degrees of freedom of the joint ball socket 1501 may be adjusted relative to the ball joint 1502.

In an embodiment, an encoder is arranged on the ball joint 1502, and a rotation angle of the ball joint 1502 may be directly measured through the encoder, so as to obtain the posture angles of the connected plantar plate 1201.

In an embodiment, when the plantar plate 1201 is separated from the obstacle, in order to enable the plantar plate 1201 to restore to an initial spatial orientation state, the elastic assembly 1503 is arranged in the joint assembly 150. The elastic assembly 1503 may be a conical return spring. One end of the conical return spring is connected to the plantar plate 1201, and another end is connected to the shank connector 1102.

In an embodiment, the elastic assembly 1503 includes a conical return spring. The conical return spring is configured to be in a passively compressed state in a case that the plantar plate 1201 is in contact with the obstacle, and release stored energy in a case that the plantar plate 1201 is separated from the obstacle, to drive the plantar plate 1201 to restore to an initial state. The conical return spring is configured to be in the passively compressed state in a case that the plantar plate 1201 is in contact with the obstacle. The conical return spring is further configured to release the stored energy (elastic potential energy) in a case that the plantar plate 1201 is separated from the obstacle, to drive the plantar plate 1201 to restore to the initial state. When the ball joint 1502 arbitrarily rotates in the three degrees of freedom, the conical return spring is in the passively compressed state. When the plantar plate is separated from the obstacle, the conical return spring releases the stored energy and drives the plantar plate 1201 to restore to the initial state. For example, when the plantar plate 1201 is separated from the obstacle, the ball joint 1502 restores the angle of the directions of the three degrees of freedom to an initial angle through the conical return spring, to adjust the posture angles of the connected plantar plate 1201 in the directions of the three degrees of freedom to initial angles, so as to adjust a spatial orientation of the plantar plate 1201 to restore to an initial spatial orientation.

In an embodiment, the elastic assembly 1503 is made of an elastic cladding material. Compared with the elastic cladding material, the conical return spring has more stable and consistent elastic performance, and in turn has higher reliability for the return effect of the plantar plate 1201.

In an embodiment, a flexible cover 1505 is cladded on an outer side of the elastic assembly 1503. One end of the flexible cover 1505 may be sleeved on the upper cover 1507 of the plantar plate, and another end may be sleeved on the shank connector 1102.

In an embodiment, the upper snap ring 1504 and the lower snap ring 1506 in the joint assembly 150 may be configured to fix two ends of the flexible cover 1505 respectively on the upper cover 1507 of the plantar plate and the shank connector 1102, so that the joint assembly 150 is sealed, thereby achieving purposes of dustproof and waterproof.

In an embodiment, the elastic assembly 1503 includes a conical return spring. The conical return spring is sleeved on a periphery of the ball joint 1502, and a lower end of the conical return spring is connected to the plantar plate 1201, and an upper end is connected to the shank connector 1102.

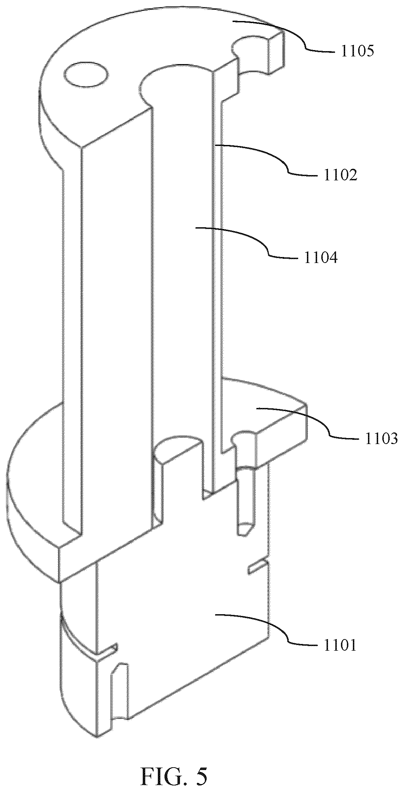

For example, FIG. 5 is a schematic cross-sectional structural diagram of the connection assembly 110 in an embodiment of this application. As shown in FIG. 5, the connection assembly 110 may connect a shank portion of an upper body 140 of the robot with a joint assembly 150. The connection assembly 110 may include: a second force sensor 1101, a shank connector 1102, a lower flange 1103, a wiring hole 1104, and an upper flange 1105.

In an embodiment, the second force sensor 1101 is a six-axis force sensor. The six-axis force sensor may be configured to measure a resultant force vector of reaction forces applied to the plantar plate 1201. A front end of the six-axis force sensor may be connected to a ball head flange of a ball joint 1502, and a rear end of the six-axis force sensor may be connected to the lower flange 1103, to conduct a force or torque.

In an embodiment, the shank connector 1102 is a triangular prism connector. Setting the shank connector in the shape of a triangular prism may facilitate connection between the upper flange 1105 and the lower flange 1103.

In an embodiment, the wiring hole 1104 is arranged in the shank connector. The wiring hole 1104 may be used as a channel for arranging connection wires, and the connection wires may be used for a first force sensor 1202, a distance sensor 1203, a posture sensor 1204, an encoder, and the second force sensor 1101 to upload measurement data to a control unit 130.

In an embodiment, a flexible cover 1505 is connected to the lower flange of the connector assembly by using an upper snap ring, achieving waterproof and dustproof protection for an entire foot of the robot.

In an embodiment, the shank connector 1102 is a hollow triangular prism connector; and a lower end of the shank connector 1102 is connected to the second force sensor 1101 by using a flange.

In an embodiment, the control unit 130 is arranged in the upper body 140 of the robot.

Therefore, by installing a first force sensor, a distance sensor, a posture sensor, and a second force sensor in a leg assembly for a robot, the leg assembly can perform comprehensive detection of a contact environment, and upload detection results of the sensors to a control unit, so that the control unit comprehensively controls the robot based on the detection results of the sensors. With the solutions in this application, rather than obtaining a measurement result in a single aspect through detection of a single pressure sensor, more types and quality of perception information about the environment are obtained by the robot, so that the control unit can obtain a more comprehensive detection result, and control the robot to move through the leg assembly according to the detection result, thereby greatly improving a control effect on the leg assembly of the robot, thus extending application scenarios of a legged robot.

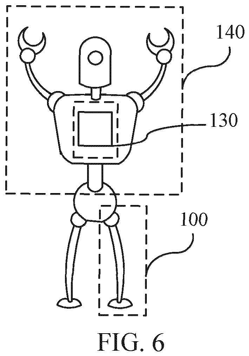

The leg assembly for a robot provided in this application may be applied to different legged robots such as bipedal humanoid robots, multi-legged robots, or may be applied to ends of various series connection or parallel connection multi-joint robots, to interact with the environment. When the leg assembly is applied to a legged robot platform as a planta, the leg assembly may adapt to a complex terrain and provide, in real time, effective feedback of a contact state for a control algorithm, thereby improving a balance control effect and a passing capability of the robot. When the leg assembly is applied to a robot platform such as a robotic arm as an end executor, the leg assembly may provide rich environmental perception information for the robot, and realize an adaptive and safe contact and interaction between the robot and the environment. FIG. 6 is a schematic diagram a robot device to which a leg assembly is applied according to an exemplary embodiment of this application. As shown in FIG. 6, the legged robot may be a bipedal humanoid robot, and the robot includes an upper body 140 of the robot, a control unit 130, and a leg assembly 100. The leg assembly 100 is configured to execute a movement instruction, so that the robot moves according to the movement instruction. The movement instructions may be sent by the control unit 130 to the leg assembly 100, and the movement instructions may include a walking instruction and a running instruction. Different types of sensors are installed on the leg assembly 100 to detect environmental information at the current moment. The leg assembly 100 is electrically connected to the control unit 130, to upload the collected environmental information at the current moment to the control unit 130. The control unit 130 analyzes the environmental information, and sends the movement instruction to the leg assembly 100, to control movement of the robot at a next moment.

Therefore, by installing a first force sensor, a distance sensor, a posture sensor, and a second force sensor in a leg assembly for a robot, the leg assembly can perform comprehensive detection of a contact environment, and upload detection results of the sensors to a control unit, so that the control unit comprehensively controls the robot based on the detection results of the sensors. With the solutions shown in this application, rather than obtaining a measurement result in a single aspect through detection of a single pressure sensor, more types and quality of perception information about the environment are obtained by the robot, so that the control unit may obtain more comprehensive detection result, and control the robot to move through the leg assembly according to the detection result, which greatly improves a control effect on the leg assembly of the robot, thereby expanding application scenarios of a legged robot.

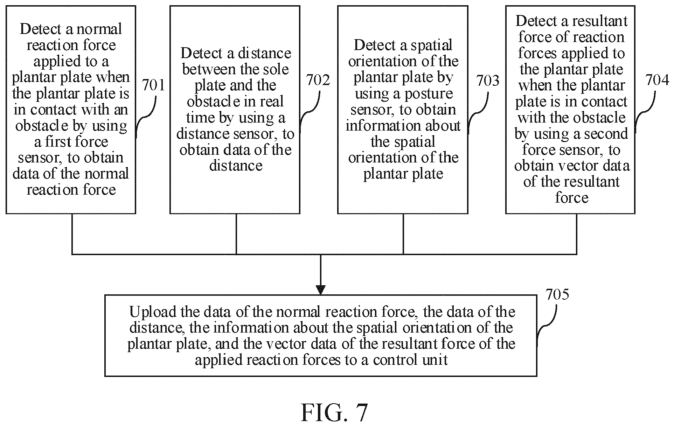

FIG. 7 is a flowchart of a method for applying a leg assembly for a robot to perform sensor detection according to an exemplary embodiment of this application. The method for performing sensor detection is executed by the leg assembly. As shown in FIG. 7, the method for performing sensor detection may include the following steps 701 to 705.

In step 701, a normal reaction force applied to a plantar plate when the plantar plate is in contact with an obstacle is detected by using a first force sensor, to obtain data of the normal reaction force.

In step 702, a distance between the plantar plate and the obstacle is detected in real time by using a distance sensor, to obtain data of the distance in real time.

In step 703, a spatial orientation of the plantar plate is detected by using a posture sensor, to obtain information about the spatial orientation of the plantar plate.

In step 704, a resultant force of reaction forces applied to the plantar plate when the plantae plated is in contact with the obstacle is detected by using a second force sensor, to obtain vector data of the resultant force.

In step 705, the data of the normal reaction force, the data of the distance, the information about the spatial orientation of the plantar plate, and the vector data of the resultant force of the applied reaction forces are uploaded to a control unit.

In an embodiment, the data of the normal reaction force, the data of the distance, the information about the spatial orientation of the plantar plate, and the vector data of the resultant force of the applied reaction forces are detected by corresponding sensors in real time.

In an embodiment, step 701, step 702, step 703, and step 704 may be performed simultaneously, or may not be performed simultaneously. In addition, the control unit may analyze at least two of the data of the normal reaction force, the data of the distance, the information about the spatial orientation of the plantar plate, and the vector data of the resultant force of the applied reaction forces, to perceive the current environment.

Therefore, by installing a first force sensor, a distance sensor, a posture sensor, and a second force sensor in a leg assembly for a robot, the leg assembly can perform comprehensive detection of a contact environment, and upload detection results of the sensors to a control unit, so that the control unit comprehensively controls the robot based on the detection results of the sensors. With the solutions shown in this application, rather than obtaining a measurement result in a single aspect through detection of a single pressure sensor, more types and quality of perception information in the environment are obtained by the robot, so that the control unit may obtain a more comprehensive detection result, and control the robot to move through the leg assembly according to the detection result, which greatly improves a control effect on the leg assembly of the robot, thereby expanding application scenarios of a legged robot.

After considering this specification and practicing the present disclosure, a person skilled in the art may easily conceive of other embodiments of this application. This application is intended to cover any variations, uses or adaptive changes of this application. Such variations, uses or adaptive changes follow the general principles of this application, and include well-known knowledge and conventional technical means in the art that are not disclosed in this application.

It is to be understood that this application is not limited to the precise structures described above and shown in the accompanying drawings, and various modifications and changes can be made without departing from the scope of this application. The scope of this application is only defined by the claims.

## Claims

1. Aleg assembly (100) for a robot, the leg assembly (100) comprising:
a connection assembly (110), configured to connect the leg assembly (100) with an upper body (140) of the robot; and
a plantar assembly (120) comprising a plantar plate (1201), a first force sensor (1202), a distance sensor (1203), and a posture sensor (1204),
the connection assembly (110) comprising a second force sensor (1101) and a shank connector (1102);
the first force sensor (1202), the distance sensor (1203), the posture sensor (1204), and the second force sensor (1101) being electrically connected to a control unit (130);
the first force sensor (1202) being configured to detect a normal reaction force applied to the plantar plate (1201) when the plantar plate (1201) is in contact with an obstacle;
the distance sensor (1203) being configured to detect a distance between the plantar plate (1201) and the obstacle in real time;
the posture sensor (1204) being configured to detect a spatial orientation of the plantar plate (1201); and
the second force sensor (1101) being configured to detect a resultant force of reaction forces applied to the plantar plate (1201) when the plantar plate (1201) is in contact with the obstacle,
wherein the plantar plate (1201) is a metal structure part with a void or a groove, and the first force sensor (1202), the distance sensor (1203), and the posture sensor (1204) are connected to the control unit (130) via connection wires passing through the void or the groove of the metal structure part, and
a bottom and an outer side of the metal structure part are cladded with plantar rubber (1206), wherein
the first force sensor (1202) is an ionic thin-film force sensor, and the ionic thin-film force sensor is arranged between the plantar rubber (1206) and the bottom of the metal structure part, and the ionic thin-film force sensor is of a ring shape, or
the distance sensor (1203) is a thin-film distance sensor, and the thin-film distance sensor is centrally arranged between the plantar rubber (1206) and the bottom of the metal structure part, and a thickness of the plantar rubber (1206) at a portion under the thin-film distance sensor is smaller than a thickness of the plantar rubber (1206) at another portion.

2. The assembly according to claim 1, wherein the plantar assembly (120) is connected with the connection assembly (110) through a joint assembly (150), and
the joint assembly (150) comprises a joint ball socket (1501), a ball joint (1502), and an elastic assembly (1503), and
the plantar plate (1201) is configured to drive, in response to a reaction force from a contact surface, the joint ball socket (1501) to rotate relative to the ball joint (1502) with three degrees of freedom, to adapt the plantar plate (1201) to fit the contact surface.

3. The assembly according to claim 2, wherein the elastic assembly (1503) comprises a conical return spring, and
the conical return spring is configured to be in a passively compressed state in a case that the plantar plate (1201) is in contact with the obstacle; and
the conical return spring is further configured to release stored energy in a case that the plantar plate (1201) is separated from the obstacle, to drive the plantar plate (1201) to restore to an initial state.

4. The assembly according to claim 2, wherein the joint ball socket (1501) comprises a limiting structure, and
the joint ball socket with the limiting structure is provided with low front and rear edges and high left and right edges.

5. The assembly according to claim 1, wherein the posture sensor (1204) is arranged in the groove of the metal structure part.

6. The assembly according to claim 2, wherein the elastic assembly (1503) comprises a conical return spring, and
the conical return spring is sleeved on a periphery of the ball joint (1502), and a lower end of the conical return spring is connected to the plantar plate (1201), and an upper end of the conical return spring is connected to the shank connector (1102).

7. The assembly according to claim 1, wherein the shank connector (1102) is a hollow triangular prism connector, and
a lower end of the shank connector (1102) is connected to the second force sensor (1101) by using a flange.

8. The assembly according to claim 1, wherein the posture sensor (1204) is an inertial measurement unit, IMU.

9. The assembly according to claim 1, wherein the second force sensor (1101) is a six-axis force sensor.

10. The assembly according to any one of claims 1 to 9, wherein a contact surface of the plantar plate (1201) with the environment is a circular plane.

11. The assembly according to claim 2, wherein an encoder is arranged on the ball joint (1502).

12. A leg device for a robot, the device comprising:
an upper body (140) of the robot, and
the leg assembly (100) according to any one of claims 1 to 11.

## Patentansprüche

1. Beinbaugruppe (100) für einen Roboter, wobei die Beinbaugruppe (100) aufweist:
eine Verbindungsbaugruppe (110), die ausgebildet ist, die Beinbaugruppe (100) mit einem Oberkörper (140) des Roboters zu verbinden; und
eine Plantar-Baugruppe (120), die eine plantare Platte (1201), einen ersten Kraftsensor (1202), einen Abstandssensor (1203) und einen Haltungssensor (1204) aufweist,
wobei die Verbindungsbaugruppe (110) einen zweiten Kraftsensor (1101) und einen Schaftverbinder (1102) aufweist;
der erste Kraftsensor (1202), der Abstandssensor (1203), der Haltungssensor (1204) und der zweite Kraftsensor (1101) elektrisch mit einer Steuereinheit (130) verbunden sind;
der erste Kraftsensor (1202) ausgebildet ist, eine normale Reaktionskraft zu erfassen, die auf die plantare Platte (1201) ausgeübt wird, wenn die plantare Platte (1201) mit einem Hindernis in Kontakt ist;
der Abstandssensor (1203) ausgebildet ist, einen Abstand zwischen der plantaren Platte (1201) und dem Hindernis in Echtzeit zu erfassen;
der Haltungssensor (1204) ausgebildet ist, eine räumliche Ausrichtung der plantaren Platte (1201) zu erfassen; und
der zweite Kraftsensor (1101) ausgebildet ist, eine resultierende Kraft von Reaktionskräften zu erfassen, die auf die plantare Platte (1201) einwirken, wenn die plantare Platte (1201) mit dem Hindernis in Kontakt ist,
wobei die plantare Platte (1201) ein Metallstrukturteil mit einem Hohlraum oder einer Nut ist und der erste Kraftsensor (1202), der Abstandssensor (1203) und der Haltungssensor (1204) mit der Steuereinheit (130) über Verbindungsdrähte verbunden sind, die durch den Hohlraum oder die Nut des Metallstrukturteils verlaufen, und
eine Unterseite und eine Außenseite des Metallstrukturteils mit plantarem Gummi (1206) verkleidet sind, wobei
der erste Kraftsensor (1202) ein ionischer Dünnfilm-Kraftsensor ist und der ionische Dünnfilm-Kraftsensor zwischen dem plantaren Gummi (1206) und der Unterseite des Metallstrukturteils angeordnet und der ionische Dünnfilm-Kraftsensor ringförmig ist, oder
der Abstandssensor (1203) ein Dünnfilm-Abstandssensor ist und der Dünnfilm-Abstandssensor mittig zwischen dem plantaren Gummi (1206) und der Unterseite des Metallstrukturteils angeordnet ist und eine Dicke des plantaren Gummis (1206) an einem Abschnitt unter dem Dünnfilm-Abstandssensor kleiner ist als eine Dicke des plantaren Gummis (1206) an einem anderen Abschnitt.

2. Baugruppe gemäß Anspruch 1, wobei die Plantar-Baugruppe (120) mit der Verbindungsbaugruppe (110) durch eine Gelenkbaugruppe (150) verbunden ist und
die Gelenkbaugruppe (150) eine Gelenkkugelpfanne (1501), ein Kugelgelenk (1502) und eine elastische Baugruppe (1503) aufweist und
die plantare Platte (1201) ausgebildet ist, als Reaktion auf eine Reaktionskraft von einer Kontaktfläche die Gelenkkugelpfanne (1501) anzutreiben, um sich relativ zu dem Kugelgelenk (1502) mit drei Freiheitsgraden zu drehen, um die plantare Platte (1201) an die Kontaktfläche anzupassen.

3. Baugruppe gemäß Anspruch 2, wobei die elastische Baugruppe (1503) eine konische Rückholfeder aufweist und
die konische Rückholfeder ausgebildet ist, sich in einem passiv komprimierten Zustand zu befinden, wenn die plantare Platte (1201) mit dem Hindernis in Kontakt ist; und
die konische Rückholfeder weiterhin ausgebildet ist, gespeicherte Energie freizusetzten, wenn die plantare Platte (1201) vom Hindernis getrennt wird, um die plantare Platte (1201) in einen Ausgangszustand zurückzubringen.

4. Baugruppe gemäß Anspruch 2, wobei die Gelenkkugelpfanne (1501) eine Begrenzungsstruktur aufweist und
die Gelenkkugelpfanne mit der Begrenzungsstruktur mit niedrigen vorderen und hinteren Kanten und hohen linken und rechten Kanten versehen ist.

5. Baugruppe gemäß Anspruch 1, wobei der Haltungssensor (1204) in der Nut des Metallstrukturteils angeordnet ist.

6. Baugruppe gemäß Anspruch 2, wobei die elastische Baugruppe (1503) eine konische Rückholfeder umfasst und
die konische Rückholfeder auf einem Umfang des Kugelgelenks (1502) aufgesteckt ist, und ein unteres Ende der konischen Rückholfeder mit der plantaren Platte (1201) verbunden ist, und ein oberes Ende der konischen Rückholfeder mit dem Schaftverbinder (1102) verbunden ist.

7. Baugruppe gemäß Anspruch 1, wobei der Schaftverbinder (1102) ein hohler dreieckiger Prismenverbinder ist, und
ein unteres Ende des Schaftverbinders (1102) mit dem zweiten Kraftsensor (1101) unter Verwendung eines Flansches verbunden ist.

8. Baugruppe gemäß Anspruch 1, wobei der Haltungssensor (1204) eine inertiale Messeinheit, IMU, ist.

9. Baugruppe gemäß Anspruch 1, wobei der zweite Kraftsensor (1101) ein sechsachsiger Kraftsensor ist.

10. Baugruppe gemäß einem der Ansprüche 1 bis 9, wobei eine Kontaktfläche der plantaren Platte (1201) mit der Umgebung eine kreisförmige Ebene ist.

11. Baugruppe gemäß Anspruch 2, wobei ein Encoder an dem Kugelgelenk (1502) angeordnet ist.

12. Beineinrichtung für einen Roboter, wobei die Beineinrichtung aufweist:
einen Oberkörper (140) des Roboters und
die Beinbaugruppe (100) gemäß einem beliebigen der Ansprüche 1 bis 11.

## Revendications

1. Ensemble de jambe (100) pour un robot, ledit ensemble de jambe (100) comprenant:
un ensemble de connexion (110) qui est configuré pour connecter l'ensemble de jambe (100) à un corps supérieur (140) du robot; et
un ensemble plantaire (120) comprenant une plaque plantaire (1201), un premier capteur de force (1202), un capteur de distance (1203) et un capteur de posture (1204),
ledit ensemble de connexion (110) comprenant un deuxième capteur de force (1101) et un connecteur de tige (1102);
le premier capteur de force (1202), le capteur de distance (1203), le capteur de posture (1204) et le deuxième capteur de force (1101) étant connectés électriquement à une unité de commande (130);
le premier capteur de force (1202) étant configuré pour détecter une force de réaction normale appliquée à la plaque plantaire (1201) lorsque la plaque plantaire (1201) est en contact avec un obstacle;
le capteur de distance (1203) étant configuré pour détecter en temps réel une distance entre la plaque plantaire (1201) et l'obstacle;
le capteur de posture (1204) étant configuré pour détecter une orientation spatiale de la plaque plantaire (1201); et
le deuxième capteur de force (1101) étant configuré pour détecter une force résultante de forces de réaction appliquées à la plaque plantaire (1201) lorsque la plaque plantaire (1201) est en contact avec l'obstacle,
dans lequel la plaque plantaire (1201) est une partie de structure métallique avec un vide ou une rainure, et le premier capteur de force (1202), le capteur de distance (1203) et le capteur de posture (1204) sont connectés à l'unité de commande (130) via des fils de connexion qui passent à travers le vide ou la rainure de la partie de structure métallique, et
un fond et un côté extérieur de la partie de structure métallique sont revêtus de caoutchouc plantaire (1206), dans lequel
le premier capteur de force (1202) est un capteur de force à couche mince ionique, et le capteur de force à couche mince ionique est disposé entre le caoutchouc plantaire (1206) et le fond de la partie de structure métallique, et le capteur de force à couche mince ionique est de forme annulaire, ou
le capteur de distance (1203) est un capteur de distance à couche mince, et le capteur de distance à couche mince est disposé de manière centrale entre le caoutchouc plantaire (1206) et le fond de la partie de structure métallique, et une épaisseur du caoutchouc plantaire (1206) sur une portion sous le capteur de distance à couche mince est inférieure à une épaisseur du caoutchouc plantaire (1206) sur une autre portion.

2. Ensemble selon la revendication 1, dans lequel l'ensemble plantaire (120) est relié à l'ensemble de connexion (110) par l'intermédiaire d'un ensemble d'articulation (150), et
l'ensemble d'articulation (150) comprend une cavité de rotule d'articulation (1501), une rotule (1502) et un ensemble élastique (1503), et
la plaque plantaire (1201) est configurée pour entraîner, en réponse à une force de réaction provenant d'une surface de contact, la cavité de rotule d'articulation (1501) à tourner par rapport à la rotule (1502) avec trois degrés de liberté, pour adapter la plaque plantaire (1201) à la surface de contact.

3. Ensemble selon la revendication 2, dans lequel l'ensemble élastique (1503) comprend un ressort de rappel conique, et
le ressort de rappel conique est configuré pour être dans un état passivement comprimé dans un cas où la plaque plantaire (1201) est en contact avec l'obstacle; et
le ressort de rappel conique est en outre configuré pour libérer de l'énergie stockée dans un cas où la plaque plantaire (1201) est séparée de l'obstacle, pour amener la plaque plantaire (1201) à revenir à un état initial.

4. Ensemble selon la revendication 2, dans lequel la cavité de rotule d'articulation (1501) comprend une structure de limitation, et
la cavité de rotule d'articulation avec la structure de limitation est dotée de bords avant et arrière bas et de bords gauche et droit hauts.

5. Ensemble selon la revendication 1, dans lequel le capteur de posture (1204) est disposé dans la rainure de la partie de structure métallique.

6. Ensemble selon la revendication 2, dans lequel l'ensemble élastique (1503) comprend un ressort de rappel conique, et
le ressort de rappel conique est emmanché sur une périphérie de la rotule (1502), et une extrémité inférieure du ressort de rappel conique est reliée à la plaque plantaire (1201), et une extrémité supérieure du ressort de rappel conique est reliée au connecteur de tige (1102).

7. Ensemble selon la revendication 1, dans lequel le connecteur de tige (1102) est un connecteur à prisme triangulaire creux, et
une extrémité inférieure du connecteur de tige (1102) est reliée au deuxième capteur de force (1101) en utilisant une bride.

8. Ensemble selon la revendication 1, dans lequel le capteur de posture (1204) est une unité de mesure inertielle, IMU.

9. Ensemble selon la revendication 1, dans lequel le deuxième capteur de force (1101) est un capteur de force à six axes.

10. Ensemble selon l'une quelconque des revendications 1 à 9, dans lequel une surface de contact de la plaque plantaire (1201) avec l'environnement est un plan circulaire.

11. Ensemble selon la revendication 2, dans lequel un codeur est disposé sur la rotule (1502).

12. Dispositif de jambe pour un robot, le dispositif comprenant:
un corps supérieur (140) du robot, et
l'ensemble de jambe (100) selon l'une quelconque des revendications 1 à 11.
